# EUROPÄISCHE PATENTSCHRIFT

(11) **EP 0 405 249 B1**
(45) Veröffentlichungstag und Bekanntmachung des Hinweises auf die Patenterteilung: **23.03.1994**
(21) Anmeldenummer: 90111317.5
(22) Anmeldetag: 15.06.1990
(51) Int. Cl.: B41F 13/14

(54) **Vorrichtung zur Einstellung des Umfangsregisters**
Device for adjusting longitudinal register
Dispositif pour régler le registre circonférentiel

(30) Priorität: 30.06.1989 DE 3921583
(43) Veröffentlichungstag der Anmeldung: 02.01.1991
(73) Patentinhaber: M.A.N.-ROLAND Druckmaschinen Aktiengesellschaft, 63012 Offenbach (DE)
(72) Erfinder: Massierer, Hartmut, D-8901 Diedorf-Oggenhof (DE)

(56) Entgegenhaltungen:
- DE-A- 760 685
- US-A- 3 945 266

## Beschreibung

Die Erfindung betrifft eine Vorrichtung zur Einstellung des Umfangsregisters eines das Druckbild tragenden Zylinders mit einer maschinenfest gelagerten, mittels eines Gewindes bei Drehung axial bewegbaren, Stellwelle, mit der ein schrägverzahntes Antriebszahnrad des Zylinders zur Umfangsregistereinstellung axial verstellbar ist.

Eine derartige Anordnung ist aus der DE-PS 760 685 bekannt. Bei dieser Anordnung ist die Welle des das Druckbild tragenden Zylinders fest gelagert, so daß dieser Zylinder keine An- und Abstellbewegungen ausführen kann. Die ebenfalls fest gelagerte Stellwelle ist lediglich axial gegenüber der Welle des Zylinders bewegbar.

Der Erfindung liegt die Aufgabe zugrunde, eine Vorrichtung der eingangs genannten Gattung so auszubilden, daß eine Schwenkbewegung des das Druckbild tragenden Zylinders zum An- und Abstellen trotz ortsfester Lagerung der Einstellmittel für das Umfangsregister möglich ist.

Erfindungsgemäß wird dies durch Anwendung der Merkmale des Kennzeichens des Anspruchs 1 erreicht. Bei Anwendung der Erfindung ergibt sich der weitere Vorteil, daß die Einstellung der Stellwelle, deren axiale Lage die Umfangsregistereinstellung bestimmt, durch das An- und Abstellen des das Druckbild tragenden Zylinders nicht beeinflußt wird. Außerdem erfordert die Vorrichtung nur einen geringen Platzbedarf. Weiterhin werden die bei der An- und Abstellung des Zylinders zu bewegenden Massen nur unwesentlich vergrößert.

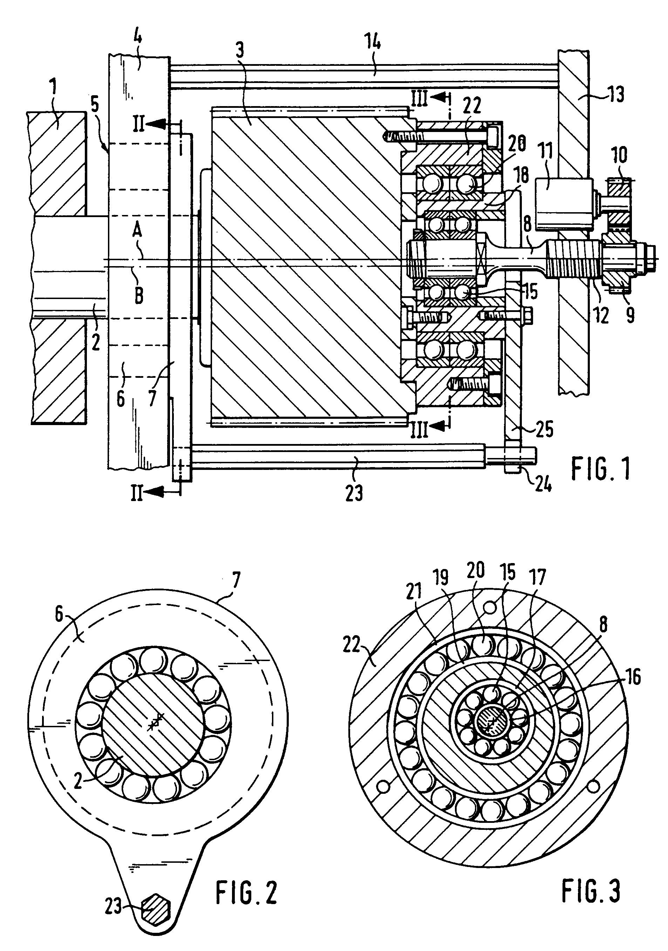

Auf der Zeichnung ist ein Ausführungsbeispiel der Erfindung wiedergegeben. Es zeigt
- Fig. 1: einen Schnitt durch eine erfindungsgemäße Vorrichtung,
- Fig. 2: einen Schnitt entlang der Linie II-II in Fig. 1 und
- Fig. 3: einen Schnitt entlang der Linie III-III in Fig. 1.

Beim dargestellten Ausführungsbeispiel ist ein das Druckbild tragender Zylinder 1 vorgesehen, der der Plattenzylinder eines nicht näher dargestellten Offsetdruckwerkes ist, an dem also einerseits ein Gummituchzylinder und andererseits Farb- und Feuchtauftragwalzen anliegen. Der Zylinder 1 sitzt drehfest, aber axial verschiebbar auf einer Welle 2, beispielsweise einer Keilwelle. Auf die Welle 2 ist fest ein Antriebszahnrad 3 mit einer Schrägverzahnung aufgesetzt. Das Antriebszahnrad 3 kämmt mit einem nicht dargestellten schräg verzahnten Zahnrad der Antriebsgetriebekette. Die Welle 2 ist in einer Seitenwand 4 der Druckmaschine mittels eines insgesamt mit 5 bezeichneten Exzenterlagers gelagert. Das Exzenterlager 5 weist einen in der Seitenwand 4 um die Achse A drehbar gelagerten Außenring 6 auf, der einstückig mit einem neben der Seitenwand angeordneten Stellring 7 ausgebildet ist. Durch Drehung des Exzenterlagers 5 entgegen dem Uhrzeigersinn bewegt sich die Achse B des Zylinders 1 um die Achse A. Hierdurch wird der Zylinder 1 von einem benachbarten Zylinder abgestellt bzw. durch Drehung in Gegenrichtung wiederum angestellt.

Zur Umfangsregistereinstellung ist eine Stellwelle 8 vorgesehen, auf deren eines Ende ein Zahnrad 9 aufgesetzt ist. Das Zahnrad 9 kämmt mit einem weiteren Zahnrad 10 auf der Welle eines Stellmotors 11. Die Stellwelle 8 trägt ein Gewinde 12, das in ein Gegengewinde einer Platine 13 eingreift. Die Platine 13 ist über einen Träger 14 fest mit der Seitenwand 4 verbunden.

Auf die Stellwelle 8 ist ein Wälzlager 15 aufgesetzt, dessen innerer Laufring 16 fest auf der Stellwelle sitzt und dessen außerer Laufring 17 im Innern einer Exzenterbuchse 18 festgelegt ist. Auf dem Außenumfang der Exzenterbuchse 18 ist ein innerer Laufring 19 eines weiteren Wälzlagers 20 festgelegt, dessen äußerer Laufring 21 an einer Hülse 22 festgelegt ist. Die Hülse 22 ist mit dem Antriebszahnrad 3 verschraubt. Anstelle der Wälzlager können auch Gleitlager Verwendung finden. Dann sind die Teile 8, 18 und 22 durch entsprechende Anschlagflächen gegen axiale Verschiebung zu sichern.

Am Exzenterlager 5 ist eine Mitnehmerstange 23 befestigt, die seitlich am Antriebszahnrad 3 vorbei geführt ist und deren freies Ende in einen gabelförmigen Ansatz 24 eines Mitnehmerarmes 25 eingreift. Der Mitnehmerarm 25 ist fest an der Exzenterbuchse 18 angeschraubt.

Die maximalen Exzentrizitäten des Exzenterlagers 5 und der Exzenterbuchse 18 sind gleich groß und gleich gerichtet. Bei einer Drehung des Exzenterlagers 5 entgegen dem Uhrzeigersinn zum Abstellen des Zylinders 1 dreht sich daher die Exzenterbuchse 18 in der gleichen Richtung wie das Exzenterlager 5 um die Stellwelle 8. Dabei bleibt infolge der Exzentrizität die Lage der Achse A der Stellwelle 8 unverändert.

Zur Umfangsregistereinstellung wird die Stellwelle 8 mittels des Stellmotors 11 gedreht. Diese Drehbewegung führt über das Gewinde 12 gleichzeitig zu einer axialen Verschiebung der Stellwelle 8. Die axiale Verschiebung wird über die Exzenterbuchse 18 und die Hülse 22 auf das Antriebszahnrad 3 übertragen. Infolge der Schrägverzahnung dreht sich das Antriebszahnrad gegenüber dem Zahnrad der Antriebsgetriebekette um einen kleinen Drehwinkel und ändert damit die Position des Zylinders 1 in Umfangsrichtung.

## Patentansprüche

1. Vorrichtung zur Einstellung des Umfangsregisters eines das Druckbild tragenden Zylinders mit einer maschinenfest gelagerten, mittels eines Gewindes bei Drehung axial bewegbaren, Stellwelle, mit der ein schrägverzahntes Antriebszahnrad des Zylinders zur Umfangsregistereinstellung axial verstellbar ist, dadurch gekennzeichnet, daß
auf der Stellwelle (8) drehbar, aber axial unverschiebbar eine Exzenterbuchse (18) gelagert,
auf der Exzenterbuchse (18) drehbar, aber axial unverschiebbar das Antriebszahnrad (3) abgestützt,
die Exzenterbuchse (18) mit dem Exzenterlager (5) des Zylinders (1) über ein Gestänge (23, 24, 25) drehfest verbunden ist und die Exzentrizitäten der Exzenterbuchse (18) und des Exzenterlagers (5) so angeordnet sind, daß bei Drehung des Exzenterlagers (5) zur Abstellung des Zylinders (1) von mindestens einem benachbarten Zylinder die Achse der Stellwelle (8) ortsfest bleibt.

2. Vorrichtung nach Anspruch 1, dadurch gekennzeichnet, daß zwischen der Stellwelle (8) und der Exzenterbuchse (18) einerseits und der Exzenterbuchse (18) und dem Antriebszahnrad (3) andererseits Wälzlager (15, 20) vorgesehen sind, deren innere und äußere Laufringe (16, 17, 19, 21) in axialer Richtung festgelegt sind.

3. Vorrichtung nach Anspruch 1 oder 2, dadurch gekennzeichnet, daß das Antriebszahnrad (3) fest mit einer Hülse (22) zur Abstützung auf der Exzenterbuchse (18) verbunden ist.

4. Vorrichtung nach Anspruch 3, dadurch gekennzeichnet, daß in der Hülse (22) der äußere Laufring (21) des Wälzlagers (20) festgelegt ist.

5. Vorrichtung nach einem der vorhergehenden Ansprüche, dadurch gekennzeichnet, daß das Gestänge (23, 24, 25) eine am Außenring (6) des Exzenterlager (5) befestigte, das Antriebszahnrad (3) umgreifende Mitnehmerstange (23) aufweist, die in einen gabelförmigen Ansatz (24) eines fest mit der Exzenterbuchse (18) verbundenen Mitnehmerarmes (25) eingreift.

## Claims

1. A device for adjusting the circumferential register of a cylinder carrying the printing image, comprising an adjusting shaft, which is fixedly mounted on the machine, is axially displaceable during rotation by means of a thread and by means of which a helical drive gear of the cylinder can be axially adjusted for the circumferential register adjustment, characterised in that an eccentric bushing (18) is mounted on the adjusting shaft (8) so as to he rotatable but axially fixed, the drive gear (3) is supported on the eccentric bushing (18) so as to be rotatable but axially fixed, the eccentric bushing (18) is rotationally rigidly connected to the eccentric bearing (5) of the cylinder (1) via a rod system (23, 24, 25) and the eccentricities of the eccentric bushing (18) and eccentric bearing (5) are arranged in such a manner that, upon rotation of the eccentric bearing (5) in order to move the cylinder (1) away from at least one adjacent cylinder, the position of the axis of the adjusting shaft (8) remains unchanged.

2. A device according to claim 1, characterised in that roller bearings (15, 20) are provided between the adjusting shaft (8) and the eccentric bushing (18) on the one hand and between the eccentric bushing (18) and the drive gear (3) on the other hand, the inner and outer races (16, 17, 19, 21) of the roller bearings being fixed in the axial direction.

3. A device according to claim 1 or 2, characterised in that the drive gear (3) is securely connected to a sleeve (22) for its support against the eccentric bushing (18).

4. A device according to claim 3, characterised in that the outer race (21) of the roller bearing (20) is fixedly mounted in the sleeve (22).

5. A device according to one of the preceding claims, characterised in that the rod system (23, 24, 25) comprises a drive rod (23), which is secured to the outer ring (6) of the eccentric bearing (5), embraces the drive gear (3) and engages in a forked extension (24) of a drive arm (25) fixedly connected to the eccentric bushing (18).

## Revendications

1. Dispositif pour la mise au repérage circonférentiel d'un cylindre portant l'image imprimante, comprenant un arbre de réglage monté sur paliers solidaires de la presse, et qui peut se déplacer axialement sous l'action d'un filetage en réponse à une rotation, et avec lequel une roue dentée d'entraînement à denture oblique du cylindre peut se déplacer axialement pour la mise au repérage circonférentiel,
caractérisé en ce qu'une douille excentrique (18) est montée mobile en rotation mais bloquée en translation axiale sur l'arbre de réglage (8),
la roue dentée d'entraînement (3) est montée mobile en rotation mais bloquée en translation axiale sur la douille excentrique (18),
la douille excentrique (18) est reliés solidairement en rotation au palier excentrique (5) du cylindre (1) par l'intermédiaire d'une tringlerie (23, 24, 25) et les excentricités de la douille excentrique (18) et du palier excentrique (5) sont agencées de manière que, lorsque le palier excentrique (5) tourne pour la mise hors pression du cylindre (1) par rapport à au moins un cylindre adjacent, l'axe de l'arbre de réglage (8) reste en position fixe.

2. Dispositif selon la revendication 1, caractérisé en ce qu'il est prévu entre l'arbre de réglage (8) et la douille excentrique (18), d'une part, ainsi qu'entre la douille excentrique (18) et la roue dentée d'entraînement (3) d'autre part, des roulements (15, 20) dont les bagues intérieures et extérieures (16, 17, 19, 21) sont bloquées dans la direction axiale.

3. Dispositif selon la revendication 1 ou 2, caractérisé en ce que la roue dentée d'entraînement (3) est reliée solidairement à une douille (22) servant à l'appui de la douille excentrique (18).

4. Dispositif selon la revendication 3, caractérisé en ce que la bague extérieure (21) du roulement (20) est fixée dans la douille (22).

5. Dispositif selon une des revendications précédentes, caractérisé en ce que la tringlerie (23, 24, 25) présente une barre d'entraîneur (23) fixée à la bague extérieure (6) du palier excentrique (5), qui chevauche la roue dentée d'entraînement (3), et qui est engagée dans un bossage (24) en forme de fourche d'un bras entraîneur (25) relié solidairement à la douille excentrique (18).
